# EUROPEAN PATENT APPLICATION

(11) **EP 4 119 617 A1**
(43) Date of publication of application: **18.01.2023**
(21) Application number: 21768725.0
(22) Date of filing: 08.03.2021
(51) Int. Cl.: C09C 1/36, C09C 3/06, C09C 3/08, C09C 3/12, C09D 17/00, C09D 201/00, C09D 7/62

(54) **SURFACE-COATED INORGANIC PARTICLES, METHOD FOR PRODUCING SAME, AND ORGANIC-SOLVENT DISPERSION OF SAME**

(30) Priority: 10.03.2020 JP 2020040631
(71) Applicant: Ishihara Sangyo Kaisha, Ltd., Osaka-shi, Osaka 550-0002 (JP)
(72) Inventor: KATO, Hironori, Osaka-shi, Osaka 550-0002 (JP); TAKIMOTO, Tadahiko, Osaka-shi, Osaka 550-0002 (JP)
(74) Representative: Grünecker Patent- und Rechtsanwälte PartG mbB
(86) International application number: PCT/JP2021/008927
(87) International publication number: WO 2021/182378

(57) **Abstract**

Provided are: surface-coated inorganic particles which can have improved dispersibility in organic solvents and enable the function and performance of the original inorganic particles to be sufficiently exhibited; and a method for producing the surface-coated inorganic particles. Also provided are an organic-solvent dispersion and a coating film which are excellent in terms of transparency and refraction property. The surfaces of inorganic particles, e.g., titanium oxide, are coated with a product of reaction between an aminated silicate compound, e.g., aminopropyltrimethoxysilane, and/or a product of the hydrolysis thereof and a compound having one α,β-unsaturated carbonyl group in the molecule, e.g., an alkoxypolyalkylene glycol (meth)acrylate.

## Description

### TECHNICAL FIELD

The present invention relates to surface-coated inorganic particles and a method for manufacturing the same, and an organic solvent dispersion in which the surface-coated inorganic particles are dispersed and a method for manufacturing the same. The present invention further relates to a paint composition containing the surface-coated inorganic particles, and a method for manufacturing a surface-coated inorganic particle layer.

### BACKGROUND ART

Various inorganic particles, for example, particles of metal oxides, metal nitrides, and metals, are used in various applications such as pigments, ultraviolet ray shielding agents, infrared ray shielding agents, visible light transmitting agents, fillers, hard coating agents, and refractive index adjusters. In such cases, in order to improve the dispersibility in a dispersing medium or to improve functions such as shielding properties and transparency, the inorganic particles are surface-coated with an organic compound before use. For example, Patent Literature 1 discloses metal oxide core particles having a coating layer including the following materials: an inorganic material; and (i) a quaternary silane coupling agent, and/or (ii) a silane coupling agent and a hydrophobizing agent. Patent Literature 1 discloses that an amino silane coupling agent is specifically used as the silane coupling agent to exhibit effective UV absorption properties, reduced photoactivity, and/or improved skin feeling.

Further, Patent Literature 2 discloses a method for producing polymerizable particles, characterized by reacting a compound (c) having an alkoxysilyl group and an unsaturated double bond, the compound (c) obtained by reacting the following: an aminosilane compound (a) containing a primary or secondary amino group; and an alkoxysilyl group with a compound (b) having at least two unsaturated double bonds, with a metal oxide particle (d) having, on a surface of the particle, a functional group capable of reacting with the alkoxysilyl group.

### CITATION LIST

### PATENT LITERATURE

PATENT LITERATURE 1: JP 2015-531734 A
PATENT LITERATURE 2: JP 2005-220243 A

### SUMMARY OF INVENTION

### TECHNICAL PROBLEM

In Patent Literature 1 above, due to having a coating layer including an amino silane coupling agent, the dispersibility and the like of surface-coated particles in a dispersing medium are improved compared with those at that time. However, in the present situation, further improvement has been required. Further, in a case where the organic-inorganic composite particles disclosed in Patent Literature 2 above are used as a coating agent, a cured paint film having better transparency, scratch resistance, hardness, solvent resistance, and adhesion than those at that time can be manufactured. However, in the present situation, development of new surface-coated particles capable of providing an organic solvent dispersion and a paint film wherein the organic solvent dispersion and the paint film have further improved transparency and refraction properties has been desired.

### SOLUTION TO PROBLEM

The present inventors have intensively studied to improve, in an organic solvent, the dispersibility of inorganic particles coated with an organic compound. As a result, the present inventors have found that the desired dispersibility in an organic solvent can be achieved by coating the surfaces of inorganic particles with a product obtained by reacting a silicate compound having an amino group with a compound having one α,β-unsaturated carbonyl group in a molecule thereof as well as the obtained surface-coated inorganic particles can be made to an organic solvent dispersion and a paint film wherein the organic solvent dispersion and the paint film are excellent in the transparency and the refraction properties, and thus have completed the present invention.

That is, the present invention is as follows, for example.
(1) Surface-coated inorganic particles coated with a reaction product, the reaction product comprising:
   a silicate compound having an amino group and/or a hydrolysis product of the silicate compound having an amino group, and
   a compound having one α,β-unsaturated carbonyl group in a molecule thereof.
(2) The surface-coated inorganic particles according to (1), wherein the compound having one α,β-unsaturated carbonyl group is a compound further having an ether bond.
(3) The surface-coated inorganic particles according to (1) or (2), wherein the compound having one α,β-unsaturated carbonyl group is a compound having the following: an ethylene glycol chain (wherein "n" expressing the number of polymerizations of the ethylene glycol chain is 2 to 10), a propylene glycol chain (wherein "n" expressing the number of polymerizations of the propylene glycol chain is 2 to 10), or a 5- to 6-membered cyclic group.
(4) The surface-coated inorganic particles according to any one of (1) to (3), wherein the compound having one α,β-unsaturated carbonyl group is (meth)acrylates having a 5- to 6-membered cyclic group, or alkoxypolyalkylene glycol (meth)acrylates.
(5) The surface-coated inorganic particles according to any one of (1) to (4), wherein the compound having one α,β-unsaturated carbonyl group is tetrahydrofurfuryl acrylate, methoxytriethylene glycol acrylate, methoxypolyethylene glycol acrylate, or methoxydipropylene glycol acrylate.
(6) The surface-coated inorganic particles according to any one of (1) to (5), wherein 0.8 ≤ "a/b" ≤ 10 is satisfied when in the reaction product, the amino group in the silicate compound having an amino group and/or the hydrolysis product of the silicate compound having an amino group is "a" mol and the compound having one α,β-unsaturated carbonyl group is "b" mol.
(7) The surface-coated inorganic particles according to any one of (1) to (6), wherein the reaction product is a low-molecular silicate compound having 3 to 100 carbon atoms and/or a hydrolysis product of the low-molecular silicate compound.
(8) The surface-coated inorganic particles according to any one of (1) to (7), wherein the inorganic particles are composed of inorganic core particles and an inorganic compound coating each surface of the inorganic core particles.
(9) The surface-coated inorganic particles according to any one of (1) to (8), wherein the inorganic particles as set forth in any one of (1) to (7) or the inorganic core particles as set forth in (8) are titanium oxide particles.
(10) An organic solvent dispersion of surface-coated inorganic particles, wherein the surface-coated inorganic particles according to any one of (1) to (9) are dispersed in an organic solvent.
(11) A paint composition comprising the surface-coated inorganic particles according to any one of (1) to (9), an organic solvent, and a resin.
(12) A paint composition comprising the organic solvent dispersion according to (10) and a resin.
(13) A method for manufacturing surface-coated inorganic particles, the method comprising the steps of:
   a first step of mixing, in an aqueous solvent, inorganic particles with a silicate compound having an amino group and/or a hydrolysis product of the silicate compound having an amino group, thereby coating each surface of the inorganic particles with the silicate compound having an amino group and/or the hydrolysis product of the silicate compound having an amino group; and
   a second step of subsequently substituting the aqueous solvent with an organic solvent, and then mixing therewith a compound having one α,β-unsaturated carbonyl group in a molecule thereof, thereby coating each surface of the inorganic particles with a reaction product of the following: the silicate compound having an amino group and/or the hydrolysis product of the silicate compound having an amino group, each of which coats each surface of the inorganic particles; and the compound having one α,β-unsaturated carbonyl group.
(14) The method for manufacturing surface-coated inorganic particles according to (13), wherein in the second step, the step of subsequently substituting the aqueous solvent with an organic solvent is performed by mixing, in the aqueous solvent, the surfactant and the organic solvent, and transferring inorganic particles to the organic solvent.
(15) A method for manufacturing surface-coated inorganic particles, the method comprising: mixing inorganic particles, a silicate compound having an amino group and/or a hydrolysis product of the silicate compound having an amino group, and a compound having one α,β-unsaturated carbonyl group in a molecule thereof, thereby coating each surface of the inorganic particles with a reaction product of the silicate compound having an amino group and/or the hydrolysis product of the silicate compound having an amino group and the compound having one α,β-unsaturated carbonyl group.
(16) The method for manufacturing surface-coated inorganic particles according to any one of (13) to (15), wherein 0.8 ≤ "a/b" ≤ 10 is satisfied when the amino group in the silicate compound having an amino group and/or the hydrolysis product of the silicate compound having an amino group is "a" mol and the compound having one α,β-unsaturated carbonyl group is "b" mol.
(17) A method for manufacturing an organic solvent dispersion of surface-coated inorganic particles, the method comprising the steps of:
   a third step of adding a poor solvent to the organic solvent dispersion obtained in the second step as set forth in (13) or (14), and subjecting the poor solvent-added organic solvent dispersion to solid-liquid separation, thereby collecting the surface-coated inorganic particles; and
   a fourth step of subsequently dispersing the collected surface-coated inorganic particles in an organic solvent.
(18) A method for manufacturing an organic solvent dispersion of surface-coated inorganic particles, the method comprising: mixing, in an organic solvent, inorganic particles, a silicate compound having an amino group and/or a hydrolysis product of the silicate compound having an amino group, and a compound having one α,β-unsaturated carbonyl group in a molecule thereof, thereby coating each surface of the inorganic particles with a reaction product of the silicate compound having an amino group and/or the hydrolysis product of the silicate compound having an amino group and the compound having one α,β-unsaturated carbonyl group, and dispersing the coated inorganic particles in the organic solvent.
(19) The method for manufacturing an organic solvent dispersion according to (18), wherein 0.8 ≤ "a/b" ≤ 10 is satisfied when the amino group in the silicate compound having an amino group and/or the hydrolysis product of the silicate compound having an amino group is "a" mol and the compound having one α,β-unsaturated carbonyl group is "b" mol.
(20) A method for manufacturing a surface-coated inorganic particle layer, the method comprising applying or spraying on a substrate the organic solvent dispersion of surface-coated inorganic particles according to (10) or the paint composition according to (11) or (12).

### ADVANTAGEOUS EFFECTS OF INVENTION

According to the present invention, the dispersibility of inorganic particles in an organic solvent can sufficiently be improved, and thus function or performance of the inorganic particles can sufficiently be exhibited.

Also, the organic solvent dispersion and the paint film, using the surface-coated inorganic particles obtained according to the present invention can provide more excellent transparency and refraction properties than those of the organic solvent dispersion and the paint film, using the conventional surface-coated inorganic particles.

Also, the surface-coated inorganic particles of the present invention and an organic solvent dispersion thereof can be manufactured by a simple method.

### DESCRIPTION OF EMBODIMENTS

The present invention relates to surface-coated inorganic particles coated with a reaction product, the reaction product comprising: a silicate compound having an amino group and/or a hydrolysis product of the silicate compound having an amino group, and a compound having one α,β-unsaturated carbonyl group in a molecule of the carbonyl compound.

The inorganic particles are not particularly limited, and examples thereof include the following: the metal oxide particles such as zinc oxide particles, titanium oxide particles, zirconium oxide particles, tin oxide particles, cerium oxide particles, iron oxide particles, and silicon oxide particles; the metal composite oxide particles such as barium titanate particles, strontium titanate particles, and calcium titanate particles; the metal compound particles such as particles of metal nitrides like titanium nitride, titanium oxynitride, silicon nitride, silicon oxynitride, aluminum nitride, and aluminum oxynitride, and the metal compound particles such as particles of metal carbides like titanium carbide, zirconium carbide, silicon carbide, and aluminum carbide; and the metal particles such as metal copper particles, silver particles, and gold particles. The average particle diameter of the inorganic particles can appropriately be designed according to the intended uses, and is preferably in the range of 1 nm to 50 µm (i.e., 1 nm or more and 50 µm or less), more preferably 2 nm to 5 µm (i.e., 2 nm or more and 5 µm or less), still more preferably 3 nm to 500 nm (i.e., 3 nm or more and 500 nm or less), and most preferably 3 nm to 100 nm (i.e., 3 nm or more and 100 nm or less). The average particle diameter is a numerical value determined by the following: measuring the longest straight line portion of each of 100 inorganic particles in an electron micrograph of the inorganic particles, and being calculated as the number average of these measured values.

The inorganic particles may be composed of inorganic particles themselves, or may be composed of inorganic core particles and an inorganic compound coating each surface of the inorganic core particles. Examples of the inorganic core particles include the above inorganic particles such as titanium oxide particles, zinc oxide particles, silicon oxide particles, and aluminum oxide particles. It is preferred that surfaces of the inorganic core particles be coated with an inorganic compound such as an oxide or hydroxide of silicon, aluminum, tin, zinc, titanium, antimony, or zirconium. In a case where the inorganic particles are composed of the inorganic particles themselves, the inorganic particles are preferably titanium oxide particles. In a case where the inorganic particles are composed of inorganic core particles and an inorganic compound coating each surface of the inorganic core particles, the inorganic core particles are preferably titanium oxide particles. The state of coating each surface of the inorganic core particles with the inorganic compound means a state in which the inorganic compound is adsorbed or precipitated on the surfaces of the inorganic core particles to be present on the surfaces of the inorganic core particles. The state of coating each surface of the inorganic core particles with the inorganic compound may be a state in which the inorganic compound is present on at least a part of each surface of the inorganic particles. The amount of the inorganic compound used to coat the surfaces of the inorganic core particles is preferably 0.1 to 50 parts by mass (i.e., 0.1 parts by mass or more and 50 parts by mass or less), more preferably 0.5 to 40 parts by mass (i.e., 0.5 parts by mass or more and 40 parts by mass or less), and still more preferably 1 to 30 parts by mass (i.e., 1 part by mass or more and 30 parts by mass or less) with respect to 100 parts by mass of the inorganic particles. It is preferred that the surfaces of the inorganic core particles of titanium oxide particles be coated with an inorganic compound such as an oxide or hydroxide of silicon, aluminum, tin, zinc, titanium, antimony, or zirconium. Such particles can be used as a titanium dioxide pigment, titanium oxide fine particles, or the like. When using as a titanium dioxide pigment, the average particle diameter of the particles is preferably 0.1 µm to 0.5 µm (i.e., 0.1 µm or more and 0.5 µm or less), more preferably 0.15 µm to 0.4 µm (i.e., 0.15 µm or more and 0.4 µm or less), and still more preferably 0.2 µm to 0.3 µm (i.e., 0.2 µm or more and 0.3 µm or less). When the particles are used as titanium oxide fine particles, the average particle diameter of the particles is preferably 1 nm to 100 nm (i.e., 1 nm or more and 100 nm or less), more preferably 2 nm to 80 nm (i.e., 2 nm or more and 80 nm or less), and still more preferably 3 nm to 50 nm (i.e., 3 nm or more and 50 nm or less).

The reaction product used to coat each surface of inorganic particles can be obtained by reacting a silicate compound having an amino group and/or a hydrolysis product of the silicate compound having an amino group with a compound having one α,β-unsaturated carbonyl group in a molecule thereof. Such a reaction is called the Michael addition reaction, and is a reaction in which a silicate compound having an amino group is added to a mono-α,β-unsaturated carbonyl compound having one C=C bond in a molecule thereof (i.e., a compound having one α,β-unsaturated carbonyl group in a molecule thereof). For this reason, the reaction product may also be referred to as a Michael adduct. The reaction product is understood as a compound in which a silicate compound and/or a hydrolysis product of the silicate compound having an amino group is added to a compound having one α,β-unsaturated carbonyl group in a molecule thereof via an amino group. The Michael addition reaction is preferably performed in the presence of inorganic particles, and each surface of the inorganic particles can be coated with the produced Michael adduct. The Michael addition reaction may be a reaction in which any hydrogen of an amino group does not remain among the amino groups (NH₂) of a silicate compound and/or a hydrolysis product of the silicate compound having an amino group, that is, a reaction in which two hydrogens of an amino group are added to 2 mol of a compound having an α,β-unsaturated carbonyl group and any hydrogen of the amino group does not remain. However, a reaction in which hydrogen (NH) of an amino group remains, that is, a reaction in which one hydrogen of an amino group is added to 1 mol of a compound having an α,β-unsaturated carbonyl group and one hydrogen of the amino group remains is preferred. For this reason, when the amino group in the silicate compound having an amino group and/or the hydrolysis product of the silicate compound having an amino group is "a" mol and the compound having one α,β-unsaturated carbonyl group in a molecule thereof is "b" mol, the reaction is performed at a molar ratio of preferably 0.8 ≤ "a/b" ≤ 10, more preferably 1 ≤ "a/b" ≤ 10, still more preferably 1 ≤ "a/b" ≤ 8, and most preferably 1 ≤ "a/b" ≤ 6.

Specific examples of the silicate compound having an amino group include a silanol compound of -C-Si(OH)₃, an alkoxysilane compound of -C-Si(OR)₃, and an alkyl alkoxysilane compound of -C-Si(OR)ₓR'₃₋ₓ (wherein "x" is an integer of 1 to 3 (i.e., 1 or more and 3 or less)). Compounds including a hydrolyzable group such as an alkoxy group represented by the following "Formula (I)" are more preferred as the above silicate compound.

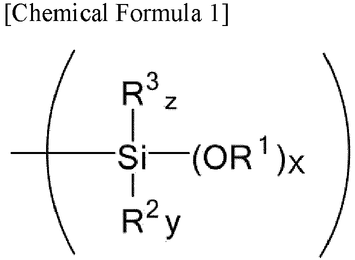

In the above "Formula (1)", the "x" is an integer of 1 to 3 (i.e., 1 or more and 3 or less), the "y" is an integer of 0 to 2 (that is, 0 or more and 2 or less), and the "z" is an integer of 0 to 1 (i.e., 0 or 1). However, the relationship of "x + y + z = 3" is established. Each of "R¹", "R²", and "R³" independently represents a hydrogen atom or an alkyl group having 1 to 4 (i.e., 1 or more and 4 or less) carbon atoms.

Specific examples of the silicate compound having an amino group include an amino group-containing alkoxysilane and an amino group-containing di(alkoxysilane). Examples of the amino group-containing alkoxysilane include 3-aminopropyltrimethoxysilane, 3-aminopropyltriethoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, 3-(trimethoxysilyl propyl)aminopropyltrimethoxysilane, 3-(triethoxysilyl propyl)aminopropyltriethoxysilane, 2-(trimethoxysilyl propyl)aminoethyl-3-aminopropyltrimethoxysilane, and 2-(triethoxysilyl propyl)aminoethyl-3-aminopropyltriethoxysilane. Further, examples of the amino group-containing di(alkoxysilane) include bis(trimethoxysilylpropyl)amine. Also, each hydrolysis product of the above silicate compositions can be prepared and used.

The compound having one α,β-unsaturated carbonyl group in a molecule thereof is not particularly limited as long as it is a mono-a,P-unsaturated carbonyl compound having one C=C bond in a molecule thereof, and a compound having a skeleton represented by the following "Formula (2)" is preferred. Also, it is more preferred that the compound having one α,β-unsaturated carbonyl group in a molecule thereof further has an ether bond in the molecule. It is preferred that the above compound further having an ether bond has the following: an ethylene glycol chain wherein "n" expressing the number of polymerizations is 2 to 10 (i.e., 2 or more and 10 or less), a propylene glycol chain wherein "n" expressing the number of polymerizations is 2 to 10 (i.e., 2 or more and 10 or less), or a 5- to 6-membered cyclic group (i.e., 5- or 6-membered cyclic group). It is still more preferred that the above compound having one α,β-unsaturated carbonyl group in a molecule thereof is (meth)acrylates having a 5- to 6-membered cyclic group or alkoxypolyalkylene glycol (meth)acrylates. The expression "(meth)acrylate(s)" means acrylate(s) and/or methacrylate(s) (which may also be referred to as "methacrylate(s)").

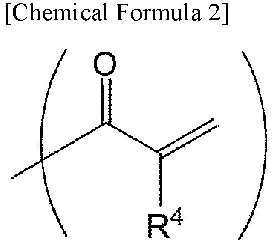

In the above "Formula (2)", the "R⁴" represents a hydrogen atom or an alkyl group having 1 to 4 (i.e., 1 or more and 4 or less) carbon atoms.

Specific examples of the compound having one α,β-unsaturated carbonyl group in a molecule thereof include the following: alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, stearyl (meth)acrylate, and lauryl (meth)acrylate; (meth)acrylates having a 5- to 6-membered cyclic group such as cyclohexyl (meth)acrylate, tetrahydrofurfuryl (meth)acrylate, isobornyl (meth)acrylate, phenyl (meth)acrylate, benzyl (meth)acrylate, phenoxyethyl (meth)acrylate, phenoxydiethylene glycol (meth)acrylate, and phenoxy polyethylene glycol (meth)acrylate; alkoxypolyalkylene glycol (meth)acrylates such as methoxydiethylene glycol (meth)acrylate, methoxytriethylene glycol (meth)acrylate, methoxypolyethylene glycol (meth)acrylate, methoxydipropylene glycol (meth)acrylate, methoxypolypropylene glycol (meth)acrylate, and ethoxypolyethylene glycol (meth)acrylate; hydroxyl group-containing (meth)acrylates such as 2-hydroxyethyl (meth)acrylate, 2-hydroxypropyl (meth)acrylate, 2-hydroxybutyl (meth)acrylate, glycerol (meth)acrylate, polyethylene glycol (meth)acrylate, and polypropylene glycol (meth)acrylate; N-substituted type (meth)acrylamides such as (meth)acrylamide, N,N-dimethyl (meth)acrylamide, N,N-diethyl (meth)acrylamide, N-isopropyl (meth)acrylamide, diacetone (meth)acrylamide, and acryloyl morpholine; and amino group-containing (meth)acrylates such as N,N-dimethylaminoethyl (meth)acrylate and N,N-diethylaminoethyl (meth)acrylate. Further, in addition to the compounds as described above, examples of the compound having one α,β-unsaturated carbonyl group in a molecule thereof include polyester (meth)acrylate, polyurethane (meth)acrylate, epoxy (meth)acrylate, and (meth)acrylic maleic acid-modified polybutadiene. Among them, (meth)acrylates having a 5- to 6-membered cyclic group or alkoxypolyalkylene glycol (meth)acrylates are preferred, and tetrahydrofurfuryl (meth)acrylate, methoxytriethylene glycol (meth)acrylate, methoxypolyethylene glycol (meth)acrylate, or methoxydipropylene glycol (meth)acrylate is more preferred. Among these more preferred compounds, tetrahydrofurfuryl acrylate of an acrylate (, which may also be referred to as "THF-A" hereinafter), methoxytriethylene glycol acrylate (which may also be referred to as "methoxytriethylene glycol acrylate" or "MTG-A" hereinafter), methoxypolyethylene glycol acrylate (which may also be referred to as "130A" hereinafter), or methoxydipropylene glycol acrylate (which may also be referred to as "methoxydipropylene glycol acrylate" or "DPM-A" hereinafter) is most preferred.

The state of coating each surface of the inorganic particles with the above reaction product means that the above reaction product is adsorbed to or precipitated on each surface of the inorganic particles or reacts on each surface of the inorganic particles to be present in a state in which the reaction product or a part of the reaction product is deformed (e.g., a state in which the reaction product is present on each surface of the inorganic particles in a state in which the alkoxy group is decomposed and separated into an alkyl group and a hydroxyl group, and adsorbed to each surface of the inorganic particles by the hydroxyl group (i.e., "-Si-OH-") or in a state in which the reaction product is hydrolyzed). The reaction product is preferably a low-molecular silicate compound having 3 to 100 (i.e., 3 or more and 100 or less) carbon atoms and/or a hydrolysis product of the low-molecular silicate compound. The number of carbon atoms is more preferably 3 to 50 (i.e., 3 or more and 50 or less), and still more preferably 3 to 40 (i.e., 3 or more and 40 or less).

The state of coating each surface of the inorganic particles with the reaction product may be a state in which the reaction product is present on at least a part of each surface of the inorganic particles. In order to sufficiently disperse the inorganic particles in an organic solvent, it is preferred that each surface of the inorganic particles is coated with the reaction product as densely as possible. The amount of the reaction product used to coat the surfaces of the inorganic particles is preferably 0.1 to 50 parts by mass (i.e., 0.1 parts by mass or more and 50 parts by mass or less), more preferably 0.5 to 40 parts by mass ((i.e., 0.5 parts by mass or more and 40 parts by mass or less), and still more preferably 1 to 30 parts by mass ((i.e., 1 part by mass or more and 30 parts by mass or less) with respect to 100 parts by mass of the inorganic particles.

Next, a dispersion in which the above surface-coated inorganic particles are dispersed in an organic solvent will be described. In the present application, the dispersion in which the above surface-coated inorganic particles are dispersed in an organic solvent is referred to as an organic solvent dispersion, and the organic solvent can be appropriately selected. Specifically, at least one solvent selected from the following solvents can be used: hydrocarbon-based solvents such as toluene, xylene, solvent naphtha, normal hexane, isohexane, cyclohexane, methylcyclohexane, normal heptane, tridecane, tetradecane, and pentadecane; alcohol-based solvents such as methanol, EtOH (i.e., ethanol), butanol, IPA (i.e., isopropyl alcohol), normal propyl alcohol, 2-butanol, TBA (i.e., tertiary butanol), butanediol, ethylhexanol, and benzyl alcohol; ketone-based solvents such as acetone, MEK (i.e., methyl ethyl ketone), methyl isobutyl ketone, DIBK (i.e., diisobutyl ketone), cyclohexanone, and DAA (i.e., diacetone alcohol); ester-based solvents such as ethyl acetate, butyl acetate, methoxybutyl acetate, cellosolve acetate, amyl acetate, normal propyl acetate, isopropyl acetate, methyl lactate, ethyl lactate, butyl lactate, and γ-butyl lactone; ether-based solvents such as methyl cellosolve, cellosolve, butyl cellosolve, dioxane, MTBE (i.e., methyl tertiary butyl ether), and butyl carbitol; glycol-based solvents such as ethylene glycol, diethylene glycol, triethylene glycol, and propylene glycol; glycol ether-based solvents such as diethylene glycol monomethyl ether, triethylene glycol monomethyl ether, PGME (i.e., 1-methoxy-2-propanol, that is, propylene glycol monomethyl ether), and 3-methoxy-3-methyl-1-butanol; glycol ester-based solvents such as ethylene glycol monomethyl ether acetate, PGMEA (i.e., propylene glycol monomethyl ether acetate), diethylene glycol monobutyl ether acetate, and diethylene glycol monoethyl ether acetate; amide-based solvents such as DMF (i.e., N,N-dimethylformamide), DEF (i.e., N,N-diethylformamide), DMAc (i.e., N,N-dimethylacetamide), and NMP (i.e., N-methylpyrrolidone); and the like. Among these solvents, an alcohol-based solvent or a glycol ether-based solvent is preferably used, and further among them, methanol, ethanol, butanol, IPA (i.e., isopropyl alcohol), or PGME (i.e., 1-methoxy-2-propanol, that is, propylene glycol monomethyl ether) is more preferably used. The content of the surface-coated inorganic particles is preferably 0.1 to 95 parts by mass (i.e., 0.1 parts by mass or more and 95 parts by mass or less), more preferably 10 to 90 parts by mass (i.e., 10 parts by mass or more and 90 parts by mass or less), and still more preferably 15 to 90 parts by mass (i.e., 15 parts by mass or more and 90 parts by mass or less) with respect to 100 parts by mass of the organic solvent.

Next, a paint composition including the above surface-coated inorganic particles, an organic solvent, and a resin, or a paint composition including the above organic solvent dispersion and a resin will be described. As for the organic solvent, those described above can be used. As for the resin, any resin can be used. For example, various types of resin such as a type of resin dissolving in a low polarity nonaqueous solvent, an emulsion type resin, and a colloidal dispersion type resin can be used without limitation. Examples of the resin include the following: a polyester resin; various modified polyester resins such as urethane-modified polyester resins, epoxy-modified polyester resins, and acrylic-modified polyesters; a polyether urethane resin; a polycarbonate urethane resin; a vinyl chloride-vinyl acetate copolymer; an epoxy resin; a phenol resin; an acrylic resin; a polyamideimide; a polyimide; modified celluloses such as an ethylcellulose, a hydroxyethylcellulose, a nitrocellulose, a cellulose acetate butyrate (i.e., CAB), and a cellulose acetate propionate (i.e., CAP); polyethylene glycol; and polyethylene oxide. The blending amount of the resin with respect to 100 parts by weight of the surface-coated inorganic particles is preferably in the range of about 0.5 to 100 parts by mass, more preferably in the range of about 1 to 50 parts by mass, and still more preferably in the range of about 2 to 25 parts by mass.

Specific examples of the resin include ARONIX (registered trademark) series B-309, B-310, M-430, M-406, M-460, and M-1100 (manufactured by TOAGOSEI CO., LTD.), LIGHT ACRYLATE (registered trademark) series MTG-A, DPM-A, THF-A, IB-XA, HOA-HH(N), 1,6HX-A, 1,9ND-A, PE-3A, and PE-4A (manufactured by kyoeisha Chemical Co., Ltd.), EPOLIGHT (trade name) series 40E, 4000, and 3002(N) (manufactured by kyoeisha Chemical Co., Ltd.), NK Ester (registered trademark) series A-TMM-3, A-9550, and A-DPH (manufactured by SHIN-NAKAMURA CHEMICAL Co., Ltd.), and KAYARAD (registered trademark) series DPHA, DPEA-12, and DPCA-60 (manufactured by Nippon Kayaku Co., Ltd.).

The above organic solvent dispersion or paint composition can be applied or sprayed on a substrate to form a layer of the surface-coated inorganic particles, and the layer can be cured as necessary. When titanium oxide fine particles are used as the surface-coated inorganic particles, a titanium oxide layer having high hardness and high visible light transparency can be formed, and the titanium oxide layer can be used as a hard coat, a high refractive index layer, or an ultraviolet ray shielding layer. The substrate is not particularly limited, and glass, plastic, ceramic, metal, or the like can be used. The film thickness and the like can appropriately be set.

The surface-coated inorganic particles can be manufactured by mixing, in the presence of inorganic particles and preferably in the presence of an organic solvent or aqueous solvent containing inorganic particles, a reaction product of the following: a previously prepared silicate compound having an amino group and/or a hydrolysis product of the silicate compound having an amino group, and a compound having one α,β-unsaturated carbonyl group in a molecule thereof, thereby coating each surface of the inorganic particles with the reaction product. This mixing operation may be only mixing and stirring at room temperature, but by giving heat, the coating proceeds faster. The mixing operation is performed preferably in the range of a room temperature to 150°C for 10 minutes to 20 hours. It is preferred to perform the mixing operation while dispersing the inorganic particles because the coating further proceeds. In a case of performing the mixing operation while dispersing the inorganic particles, a known dispersing machine can be used. Specific examples of the dispersing machine include a sand mill, a homogenizer, a ball mill, a paint shaker, and an ultrasonic dispersing machine. The coating also proceeds by hydrolyzing an alkoxy group of the reaction product, but a certain amount of water is required for the hydrolysis reaction, and the water is added to the hydrolyzable group of a silicate in equivalents of 0.5 to 1.5 (i.e., in the range of 0.5 equivalents or more and 1.5 equivalents or less). Also, in order to promote the hydrolysis reaction, an acid or alkali may be added as a catalyst. In this way, the surface-coated inorganic particles can be manufactured, and further a dispersion in which the surface-coated inorganic particles are dispersed in the organic solvent can also be manufactured. As another method, a silicate compound having an amino group and/or a hydrolysis product of the silicate compound having an amino group is previously mixed with the above compound having one α,β-unsaturated carbonyl group in a solvent-free system to partially cause the reaction, and then the mixture is added together with inorganic particles in an organic solvent, thereby also manufacturing a dispersion in which the surface-coated inorganic particles are dispersed in the organic solvent.

Further, as another method, the surface-coated inorganic particles can be manufactured by obtaining a reaction product by mixing and reacting, in the presence of inorganic particles and preferably in an organic solvent or aqueous solvent containing inorganic particles, a silicate compound having an amino group and/or a hydrolysis product of the silicate compound having an amino group with a compound having one α,β-unsaturated carbonyl group in a molecule thereof, thereby coating each surface of the inorganic particles with the reaction product. This mixing operation may be only mixing and stirring at room temperature in the same way as above, but by giving heat, the reaction proceeds faster. The mixing operation is performed preferably in the range of a room temperature to 150°C for 10 minutes to 20 hours. It is preferred to perform the mixing operation while dispersing the inorganic particles because the coating further proceeds. In a case of performing the mixing operation while dispersing the inorganic particles, a known dispersing machine can be used. Specific examples of the dispersing machine include a sand mill, a homogenizer, a ball mill, a paint shaker, and an ultrasonic dispersing machine. The coating also proceeds by hydrolyzing an alkoxy group of a reaction product, but a certain amount of water is required for the hydrolysis reaction, and the water is added to the hydrolyzable group of a silicate in equivalents of 0.5 to 1.5 (i.e., in the range of 0.5 equivalents or more and 1.5 equivalents or less). Also, in order to promote the hydrolysis reaction, an acid or alkali may be added as a catalyst. In this way, the surface-coated inorganic particles can be manufactured, and further a dispersion in which the surface-coated inorganic particles are dispersed in the organic solvent can also be manufactured.

In the present invention, the surface-coated inorganic particles can be manufactured by the above method, but it is preferred to include the following first step and second step in order to manufacture more advanced surface-coated inorganic particles.

### (First step)

The first step is a step of mixing, in an aqueous solvent, inorganic particles with a silicate compound having an amino group and/or a hydrolysis product of the silicate compound having an amino group, thereby coating each surface of the inorganic particles with the silicate compound having an amino group and/or the hydrolysis product of the silicate compound having an amino group.

### (Second step)

The second step is a step of subsequently substituting the above aqueous solvent with an organic solvent, and then mixing therewith a compound having one α,β-unsaturated carbonyl group in a molecule thereof, thereby coating each surface of the inorganic particles with a reaction product of the following: the above silicate compound having an amino group and/or the hydrolysis product of the above silicate compound, each of which coats each surface of the inorganic particles; and the compound having one α,β-unsaturated carbonyl group.

First, in the first step, inorganic particles are mixed, in an aqueous solvent, with a silicate compound having an amino group and/or a hydrolysis product of the silicate compound having an amino group so that the above silicate compound having an amino group and/or the hydrolysis product of the above silicate compound having an amino group can be adsorbed to, precipitated on, or reacted on each surface of the inorganic particles, thereby coating each surface of the inorganic particles. If necessary, the adjustment of the pH or the hydrolyzation of the silicate compound may be performed. The aqueous solvent may include water or an organic solvent soluble in water. In the mixing of the inorganic particles with a silicate compound having an amino group and/or a hydrolysis product of the silicate compound having an amino group in the aqueous solvent, it is preferred to prepare a dispersion liquid in which the inorganic particles are suspended or dispersed by means of an ordinary suspending machine or dispersing machine. Also, the inorganic particles may previously be suspended or dispersed in the aqueous solvent by means of an ordinary suspending machine or dispersing machine, and then can mix a silicate compound having an amino group and/or a hydrolysis product of the silicate compound having an amino group with the aqueous dispersion liquid. The content of the inorganic particles in the aqueous solvent can appropriately be set. This mixing operation may be only mixing and stirring at room temperature in the same way as above, but by giving heat, the reaction proceeds faster. The mixing operation is performed preferably in the range of a room temperature to a heating reflux temperature for 10 minutes to 20 hours. It is preferred to perform the mixing operation while dispersing the inorganic particles because the coating further proceeds. In a case of performing the mixing operation while dispersing the inorganic particles, a known dispersing machine can be used. Specific examples of the dispersing machine include a sand mill, a homogenizer, a ball mill, a paint shaker, and an ultrasonic dispersing machine. The coating also proceeds by hydrolyzing an alkoxy group of a reaction product, but a certain amount of water is required for the hydrolysis reaction, and the water is added to the hydrolyzable group of a silicate in equivalents of 0.5 to 1.5 (i.e., in the range of 0.5 equivalents or more and 1.5 equivalents or less). Further, in order to promote the hydrolysis reaction, an acid or alkali may be added as a catalyst. Here, both a suspension liquid and a dispersion liquid show a state in which fine particles are dispersed in a liquid, but it is generally understood that the suspension liquid is easier for fine particles to settle than the dispersion liquid. However, in the present specification, for convenience, a suspension liquid and a dispersion liquid are not particularly distinguished from each other, and the suspension liquid is also referred to as the dispersion liquid.

Next, in the second step, the above aqueous solvent is substituted with an organic solvent, and the above inorganic particles are suspended or dispersed in the organic solvent. The substitution method can be a conventionally known method such as centrifugation, decantation, or flushing. As a preferred method, a surfactant and an organic solvent are mixed with the above aqueous solvent containing the inorganic particles coated with a silicate compound having an amino group and/or a hydrolysis product of the silicate compound having an amino group, the inorganic particles are precipitated, the solid-liquid separation is performed as necessary, and then the inorganic particles are transferred to the organic solvent. The surfactant is preferably an anionic surfactant. When being dissociated in water, the anionic surfactant turns into anions, and neutralizes the silicate compound having an amino group and/or the hydrolysis product of the silicate compound having an amino group, each of which coats the inorganic particles in the first step, thereby aggregating and precipitating the inorganic particles. Examples of the surfactant include monoalkyl sulfates (ROSO₃⁻M⁺), alkyl polyoxyethylene sulfates (RO(CH₂CH₂O)ₘSO₃⁻M⁺), alkylbenzene sulfonates (RCH₂CHC₆H₄SO₃⁻M⁺), and monoalkyl phosphates (ROPO(OH)O⁻M⁺), and dialkyl sulfosuccinates such as di(2-ethylhexyl) sodium sulfosuccinate is preferred. The above "R" represents an alkyl chain having 12 to 15 (i.e., 12 or more and 15 or less) carbon atoms, the above "m" is an integer of 1 to 150 (i.e., 1 or more and 150 or less), and the above "M" represents at least one selected from alkali metals or alkaline earth metals. As for the solid-liquid separation, a conventionally known method such as centrifugation, filtration, or ultrafiltration can be used, and the excessive silicate compound, surfactant, and the like can be removed. The inorganic particles may be washed as necessary. Furthermore, after collecting the precipitated inorganic particles by solid-liquid separation, the heat-treatment (specifically, drying) of the inorganic particles at a temperature of 80 to 200°C (i.e., 80°C or more and 200°C or less) is more preferred because each surface of the inorganic particles is more firmly coated with a silicate compound having an amino group and/or a hydrolysis product of the silicate compound having an amino group. The more preferred temperature is 100 to 160°C (i.e., 100°C or more and 160°C or less). Then, the solid-liquid separated inorganic particles or the heat-treated inorganic particles are suspended or dispersed in the organic solvent using a suspending machine or a dispersing machine to form a dispersion. The content of the inorganic particles can appropriately be set. As for the organic solvent, those described above can be appropriately used. The organic solvent preferably does not contain water, and the content of water is preferably 1% by mass or less.

Next, after the inorganic particles coated with the above silicate compound having an amino group and/or the hydrolysis product of the above silicate compound having an amino group are dispersed in an organic solvent, a compound having one α,β-unsaturated carbonyl group in a molecule thereof is mixed and reacted to coat each surface of the above inorganic particles with a reaction product of the following: the above silicate compound having an amino group and/or the hydrolysis product of the above silicate compound; and the above compound having one α,β-unsaturated carbonyl group.

When a compound having one α,β-unsaturated carbonyl group in a molecule thereof is mixed in an organic solvent dispersion of the inorganic particles coated with the above silicate compound having an amino group and/or the hydrolysis product of the above silicate compound, the compound having one α,β-unsaturated carbonyl group in a molecule thereof reacts with the above silicate compound having an amino group and/or the hydrolysis product of the above silicate compound, each of the above silicate compound having an amino group and/or the hydrolysis product thereof coating each surface of the above inorganic particles. And, the reaction product produced thereby comes to coat each surface of the inorganic particles. The silicate compound having an amino group and/or the hydrolysis product of the silicate compound having an amino group, each of which coats each surface of the inorganic particles, bonds with the α,β-unsaturated carbonyl compound, thereby producing inorganic particles coated with a silicate compound having an alkyl chain having a large number of carbon atoms. The compound having one α,β-unsaturated carbonyl group to be reacted is preferably a compound having one α,β-unsaturated carbonyl group in a molecule thereof, and further having an ether bond in its molecule. As the compound having an ether bond, a compound having an ethylene glycol chain in which the number of polymerizations "n" is 2 to 10 (i.e., 2 or more and 10 or less), a propylene glycol chain in which the number of polymerizations "n" is 2 to 10 (i.e., 2 or more and 10 or less), or a 5- to 6-membered cyclic group is more preferred, and (meth)acrylates having a 5- to 6-membered cyclic group (i.e., 5- or 6-membered cyclic group) or alkoxypolyalkylene glycol (meth)acrylates are still more preferred.

The mixing operation of the compound having one α,β-unsaturated carbonyl group may be only mixing and stirring at room temperature as in the above, but by giving heat, the reaction proceeds faster. The mixing operation is performed preferably in the range of a room temperature to a heating reflux temperature for 10 minutes to 20 hours. It is preferred to perform the mixing operation while dispersing the inorganic particles because the coating further proceeds. In a case of performing the mixing operation while dispersing the inorganic particles, a known dispersing machine can be used. Specific examples of the dispersing machine include a sand mill, a homogenizer, a ball mill, a paint shaker, and an ultrasonic dispersing machine. In this way, the surface-coated inorganic particles can be manufactured, and further a dispersion in which the surface-coated inorganic particles are dispersed in an organic solvent can also be manufactured. When the amino group in the silicate compound having an amino group and/or the hydrolysis product of the silicate compound having an amino group is "a" mol and the compound having one α,β-unsaturated carbonyl group is "b" mol, 0.8 ≤ "a/b" ≤ 10 is preferred, 1 ≤ "a/b" ≤ 10 is more preferred, 1 ≤ "a/b" ≤8 is still more preferred, and 1 ≤ "a/b" ≤ 6 is most preferred.

In the present invention, it is preferred to include the following third step and fourth step in order to manufacture a more advanced organic solvent dispersion.

### (Third step)

The third step is a step of adding a poor solvent to the organic solvent dispersion obtained in the second step, and subjecting the poor solvent-added organic solvent dispersion to solid-liquid separation, thereby collecting the surface-coated inorganic particles.

### (Fourth step)

The fourth step is a step of subsequently dispersing the collected surface-coated inorganic particles in an organic solvent.

In the third step, a poor solvent is added to an organic solvent in which the surface-coated inorganic particles manufactured in the second step are suspended, and the mixture obtained thereby is subjected to solid-liquid separation to collect surface-coated inorganic particles. As for the solid-liquid separation, a conventionally known method can be used, and the surface-coated inorganic particles are collected using a method such as centrifugation, filtration, or ultrafiltration. A poor solvent may be mixed with the organic solvent in which the surface-coated inorganic particles are dispersed to aggregate and precipitate the surface-coated inorganic particles, so that solid-liquid separation is facilitated. The poor solvent can appropriately be selected, and a polar solvent such as an alcohol, or a nonpolar solvent such as hexane, benzene, or petroleum ether may be used. The addition amount of the poor solvent can appropriately be set within the range that the surface-coated inorganic particles can be aggregated. The aggregated surface-coated inorganic particles can be separated from the organic solvent and the poor solvent by solid-liquid separation, and the excessive compound can be removed. The surface-coated inorganic particles may be washed and dried as necessary. The drying temperature can be appropriately set, and the drying is performed preferably at a temperature of 80 to 200°C (i.e., 80°C or more and 200°C or less), and more preferably at a temperature of 100 to 160°C (i.e., 100°C or more and 160°C or less).

In the fourth step, the collected surface-coated inorganic particles are mixed with an organic solvent and dispersed in the organic solvent. After the third step above, the surface-coated inorganic particles separated by solid-liquid separation (including the inorganic particles dried after solid-liquid separation) are suspended or dispersed in an organic solvent, thereby manufacturing an organic solvent dispersion. As for the organic solvent, those described above can be used, and as a means for performing a suspension or dispersion, a known suspending machine or dispersing machine can be used.

By mixing the surface-coated inorganic particles manufactured as described above with an organic solvent, an organic solvent dispersion can be manufactured. Further, a paint composition can be manufactured by mixing surface-coated inorganic particles, the organic solvent, and a resin, or by mixing a resin with the organic solvent dispersion. For the mixing, a known suspending machine or dispersing machine can be used. An additive agent such as a dispersing agent may be appropriately added to the organic solvent dispersion and the paint composition. The organic solvent dispersion or the paint composition of the surface-coated inorganic particles, manufactured in such a way can be applied or sprayed on a substrate to manufacture a surface-coated inorganic particle layer. The substrate is not particularly limited, and glass, plastic, ceramic, metal, or the like can be used. A layer of the surface-coated inorganic particles can be formed on the substrate and cured as necessary. The layer can be appropriately cured by a conventional method, and drying at a temperature of 50 to 200°C (that is, 50°C or more and 200°C or less) is preferred, and drying at a temperature of 80 to 150°C (that is, 80°C or more and 150°C or less) is more preferred. The curing time can appropriately be set. Further, the film thickness and the like can appropriately be set.

### EXAMPLES

Examples and Comparative Examples are as shown below, but the present invention is not limited to these examples.

### [Example 1]

An aqueous solution was obtained by mixing 0.48 g of 3-aminopropyltrimethoxysilane (manufactured by Shin-Etsu Chemical Co., Ltd.: KBM-903 which is referred to as "KBM-903" hereinafter), 29.76 g of ion-exchanged water, and 0.16 g of acetic acid. And then, 1.6 g of titanium oxide (manufactured by ISHIHARA SANGYO KAISHA, LTD.: TTO-51A) and 98 g of 0.05 mm zirconia beads were added thereto, and dispersed with a bead mill. After removing the beads, centrifugation was performed to collect the supernatant, thereby obtaining an aqueous titanium oxide dispersion (i.e., TiO₂ concentration of 5%) treated with 3-aminopropyltrimethoxysilane.

Next, to 80 g of the obtained aqueous dispersion liquid was added 3.76 g of dioctyl sodium sulfosuccinate (manufactured by Sigma-Aldrich Japan K.K. which is referred to as DSS hereinafter) dissolved in 40 g of toluene. After being left to stand overnight, the resultant mixture was subjected to solvent substitution. Dean-Stark apparatus was attached, and dehydration heating was performed at an oil bath temperature of 140°C for 4 hours to obtain a toluene dispersion of titanium oxide (adjusted to a TiO₂ concentration of 10%) treated with 3-aminopropyltrimethoxysilane.

Next, to 10 g of the obtained toluene dispersion was added 10 g of 1-methoxy-2-propanol, that is, propylene glycol monomethyl ether (which is referred to as "PGME" hereinafter). And then, 0.183 g of methoxy-triethylene glycol acrylate (manufactured by kyoeisha Chemical Co., Ltd.: LIGHT ACRYLATE (registered trademark) MTG-A which is referred to as "MTG-A" hereinafter) and 0.339 g of triethylamine (manufactured by FUJIFILM Wako Pure Chemical Corporation) were added thereto, and the resultant mixture was stirred at 65°C for 24 hours. After completion of the stirring, 40 g of petroleum ether (i.e., poor solvent) was added thereto, and a precipitate was collected by centrifugation. PGME was added to the precipitate and dispersed therein to obtain a dispersion, that is, "PGME dispersion 1".

### [Example 2]

The same operations as those in "Example 1" were performed except that 0.183 g of methoxy-polyethylene glycol acrylate (manufactured by kyoeisha Chemical Co., Ltd.: LIGHT ACRYLATE (registered trademark) 130A which is referred to as "130A" hereinafter) was used in place of MTG-A in "Example 1", thereby obtaining a dispersion, that is, "PGME dispersion 2".

### [Example 3]

The same operations as those in "Example 1" were performed except that the addition amount of MTG-A was changed to 0.061 g and N,N-dimethylacetamide (which is referred to as "DMAc" hereinafter) was used in place of PGME in "Example 1", thereby obtaining a dispersion, that is, "DMAc dispersion 3".

### [Example 4]

A solution was obtained by mixing 0.225 g of KBM-903, 0.275 g of MTG-A, and 37.5 g of PGME And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "PGME dispersion 4".

### [Example 5]

A solution was obtained by mixing 0.235 g of KBM-903, 0.265 g of methoxydipropylene glycol acrylate (manufactured by kyoeisha Chemical Co., Ltd.: LIGHT ACRYLATE (registered trademark) DPM-A), and 37.5 g of PGME. And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "PGME dispersion 5".

### [Example 6]

A solution was obtained by mixing 0.135 g of KBM-903, 0.365 g of 130A, and 37.5 g of PGME And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "PGME dispersion 6".

### [Example 7]

A solution was obtained by mixing 0.213 g of KBM-903, 0.287 g of 130A, and 37.5 g of PGME And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "PGME dispersion 7".

### [Example 8]

A solution was obtained by mixing 0.427 g of KBM-903, 0.173 g of MTG-A, and 37.4 g of DMAc. And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "DMAc dispersion 8".

### [Example 9]

A solution was obtained by mixing 0.316 g of KBM-903, 0.284 g of 130A, and 37.4 g of DMAc. And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "DMAc dispersion 9".

### [Example 10]

A solution was obtained by mixing 0.414 g of KBM-903, 0.186 g of 130A, and 37.4 g of DMAc. And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, thereby obtaining a dispersion, that is, "DMAc dispersion 10".

### [Example 11]

A solution was obtained by mixing 0.316 g of KBM-903, 0.284 g of 130A, and 37.4 g of DMAc. And then, to the obtained solution were added 2 g of zirconium oxide (manufactured by DAIICHI KIGENSO KAGAKU KOGYO CO., LTD.: UEP-100) and 65 g of 0.1 mm zirconia beads, and dispersed with a bead mill. After removing the beads, centrifugation was performed to collect the supernatant, thereby obtaining a dispersion, that is, "DMAc dispersion 11".

### [Comparative Example 1]

A solution was obtained by mixing 0.6 g of 3-aminopropyltrimethoxysilane (manufactured by Shin-Etsu Chemical Co., Ltd.: KBM-903), and 37.4 g of DMAc. And then, to the obtained solution were added 2 g of titanium oxide (manufactured by ISHIHARA SANGYO KAISHA, LTD.: TTO-51A) and 65 g of 0.1 mm zirconia beads, and dispersed with a bead mill. After removing the beads, centrifugation was performed to collect the supernatant, but the whole amount of titanium oxide was precipitated.

### [Reference Example 1]

The aqueous titanium oxide dispersion (i.e., TiO₂ concentration of 5%) treated with 3-aminopropyltrimethoxysilane, which was obtained in "Example 1", was used as a reference sample for a criterion of the evaluation of dispersibility.

In "Examples 1 to 11" and "Reference Example 1", the particle size distribution was measured.

### [Measurement of Particle Size Distribution]

The particle size distribution of the inorganic particles in the dispersion was measured using a dynamic light scattering (DLS) particle size distribution analyzer (Nanotrac (registered trademark) Wave 2 UZ152 manufactured by MicrotracBEL Corp.), and each cumulative particle size distribution of D10, D50, and D90 was measured. The results are shown in Table 1. Further, as described above, the "a/b" shown in Table 1 represents a molar ratio of the amino group to the compound having one α,β-unsaturated carbonyl group when in the reaction product, the amino group in the silicate compound having an amino group and/or the hydrolysis product of the silicate compound having an amino group is "a" mol and the compound having one α,β-unsaturated carbonyl group is "b" mol. In this regard, in "Examples 1 to 3", the "solvent substitution" is performed, and thus there is a discrepancy between the "a/b" obtained from the charge amount of the silicate compound having an amino group and/or the hydrolysis product of the silicate compound having an amino group and the charge amount of the compound having one α,β-unsaturated carbonyl group and the actual "a/b". For this reason, as for the "a/b" in "Examples 1 to 3", each of the obtained organic solvent dispersions was subjected to thermogravimetric analysis, and the values calculated from the amount of mass loss measured by the thermogravimetric analysis are shown in Table 1.

**[Table 1]**

| Experiment Examples | a/b | Compound having α,β-unsaturated carbonyl group | Solvent | Concentration of inorganic particles (% by mass) | Concentration of reaction product (% by mass) | Particle size distribution (nm) | | |
|---|---|---|---|---|---|---|---|---|
| | | | | | | D10 | D50 | D90 |
| Example 1 | 1 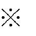 | MTG-A | PGME | 20 | 6.4 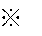 | 18.6 | 28.9 | 46.2 |
| Example2 | 2.2 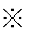 | 130A | PGME | 20 | 6.4 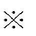 | 20.3 | 31.6 | 47.7 |
| Example3 | 3 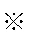 | MTG-A | DMAc | 20 | 4.2 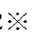 | 19.0 | 28.1 | 40.3 |
| Example4 | 1 | MTG-A | PGME | 5 | 1.25 | 27.2 | 39.1 | 58.8 |
| Example5 | 1 | DPM-A | PGME | 5 | 1.25 | 29.7 | 42.6 | 63.0 |
| Example6 | 1 | 130A | PGME | 5 | 1.25 | 21.7 | 30.6 | 43.4 |
| Example7 | 2 | 130A | PGME | 5 | 1.25 | 23.6 | 32.4 | 45.9 |
| Example8 | 3 | MTG-A | DMAc | 5 | 1.5 | 24.0 | 36.7 | 55.9 |
| Example9 | 3 | 130A | DMAc | 5 | 1.5 | 23.2 | 34.6 | 52.4 |
| Example 10 | 6 | 130A | DMAc | 5 | 1.5 | 21.8 | 34.1 | 52.6 |
| Example 11 | 3 | 130A | DMAc | 5 | 1.5 | 14.9 | 22.9 | 36.0 |
| Reference Example 1 | - | - | Water | 5 | 1.5 | 21.6 | 31.4 | 45.2 |
| 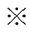 Calculated value | | | | | | | | |

It has been found that in the dispersions of "Examples 1 to 11", the value of particle size distribution of "D50" is in the vicinity of 40 nm or less than 40 nm, which is not so different from the value of particle size distribution of "D50" of the aqueous dispersion of "Reference Example 1", and thus, the inorganic particles are sufficiently dispersed even in an organic solvent as is the case with the aqueous dispersion of "Reference Example 1".

### [Example 12]

A solution was obtained by mixing 0.445 g of KBM-903, 1.225 g of 130A, and 21.92 g of PGME And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 12".

### [Example 13]

A solution was obtained by mixing 0.716 g of KBM-903, 0.964 g of 130A, and 21.92 g of PGME And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 13".

### [Example 14]

A solution was obtained by mixing 0.885 g of KBM-903, 0.795 g of 130A, and 21.92 g of PGME And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 14".

### [Example 15]

A solution was obtained by mixing 1.092 g of KBM-903, 0.558 g of 130A, and 21.92 g of PGME And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 15".

### [Example 16]

A solution was obtained by mixing 1.324 g of KBM-903, 0.356 g of 130A, and 21.92 g of PGME And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 16".

### [Example 17]

A solution was obtained by mixing 1.079 g of KBM-903, 0.601 g of 130A, and 21.92 g of PGME And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 17".

### [Example 18]

A solution was obtained by mixing 0.885 g of KBM-903, 0.795 g of 130A, and 21.92 g of PGME And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 18".

### [Example 19]

A solution was obtained by mixing 1.092 g of KBM-903, 0.558 g of 130A, and 21.92 g of PGME And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 19".

### [Example 20]

A solution was obtained by mixing 0.789 g of KBM-903, 0.891 g of methoxydipropylene glycol acrylate (manufactured by kyoeisha Chemical Co., Ltd.: LIGHT ACRYLATE (registered trademark) DPM-A which is referred to as "DPM-A" hereinafter), and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 20".

### [Example 21]

A solution was obtained by mixing 0.959 g of KBM-903, 0.721 g of DPM-A, and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 21".

### [Example 22]

A solution was obtained by mixing 0.959 g of KBM-903, 0.721 g of DPM-A, and 21.92 g of PGME. And then, to the obtained solution were added 8.4 g of titanium oxide (manufactured by ISHIHARA SANGYO KAISHA, LTD.: TTO-51N) and 65 g of 0.1 mm zirconia beads, and dispersed with a bead mill. After removing the beads, centrifugation was performed to collect the supernatant, thereby obtaining a dispersion, that is, "PGME dispersion 22".

### [Example 23]

A solution was obtained by mixing 1.221 g of KBM-903, 0.459 g of DPM-A, and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 23".

### [Example 24]

A solution was obtained by mixing 1.063 g of KBM-903, 0.617 g of tetrahydrofurfuryl acrylate (manufactured by kyoeisha Chemical Co., Ltd.: LIGHT ACRYLATE (registered trademark) THF-A which is referred to as "THF-A" hereinafter), and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 24".

### [Example 25]

A solution was obtained by mixing 0.927 g of KBM-903, 0.753 g of MTG-A, and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGME dispersion 25".

### [Example 26]

A solution was obtained by mixing 0.883 g of KBM-903, 0.797 g of DPM-A, and 21.92 g of propylene glycol monomethyl ether acetate (PGMEA). And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "PGMEA dispersion 26".

### [Example 27]

A solution was obtained by mixing 0.959 g of KBM-903, 0.721 g of DPM-A, and 21.92 g of ethanol (EtOH). And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "Ethanol dispersion 27".

### [Example 28]

A solution was obtained by mixing 0.959 g of KBM-903, 0.721 g of DPM-A, and 21.92 g of isopropyl alcohol (IPA). And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "Isopropyl alcohol dispersion 28".

### [Example 29]

A solution was obtained by mixing 0.883 g of KBM-903, 0.797 g of DPM-A, and 21.92 g of methyl ethyl ketone (MEK). And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, thereby obtaining a dispersion, that is, "Methyl ethyl ketone dispersion 29".

### [Comparative Example 2]

A solution was obtained by mixing 1.030 g of KBM-903, 0.650 g of 1,6-hexanediol diacrylate, (manufactured by kyoeisha Chemical Co., Ltd.: LIGHT ACRYLATE (registered trademark) 1,6HX-A), and 21.92 g of PGM. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, but the whole amount of titanium oxide was precipitated.

### [Comparative Example 3]

A solution was obtained by mixing 0.539 g of KBM-903, 1.141 g of PEG600# diacrylate (manufactured by kyoeisha Chemical Co., Ltd.: LIGHT ACRYLATE (registered trademark) 14EG-A), and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, but the whole amount of titanium oxide was precipitated.

### [Comparative Example 4]

A solution was obtained by mixing 1.083 g of KBM-903, 0.650 g of trimethylolpropane triacrylate (manufactured by TOAGOSEI CO., LTD.: ARONIX (registered trademark) M-309), and 21.92 g of PGME And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. After removing the beads, centrifugation was performed to collect the supernatant, but the whole amount of titanium oxide was precipitated.

The dispersion states in "Examples 12 to 29" and "Comparative Examples 2 to 4" are shown in Table 2. The case where the dispersion state was favorable is expressed as "∘", the case where the dispersion was observed but the concentration was 5% or more as the solid content is expressed as "Δ", and the case where the dispersion was not observed is expressed as "×" in Table 2. Further, as the α,β-unsaturated carbonyl compound in Table 2, a mono-α,β-unsaturated carbonyl compound having one C=C bond in a molecule thereof (i.e., compound having one α,β-unsaturated carbonyl group in a molecule thereof) was used in "Examples 12 to 29", and as another α,β-unsaturated carbonyl compound, di- or tri-unsaturated carbonyl compound having 2 to 3 C=C bonds in a molecule thereof was used in "Comparative Examples 2 to 4".

### [Paint preparation 1]

By mixing 4 g of each of titanium dioxide fine particle (TTO-51N)-containing organic solvent dispersions obtained in "Examples 12 to 16" and "Example 22", 0.25 g of dipentaerythritol hexaacrylate (manufactured by TOAGOSEI CO., LTD.: M-405), 0.25 g of urethane acrylate (manufactured by TOAGOSEI CO., LTD.: M-1200), 0.025 g of IRGACURE (registered trademark)-184, 0.4 g of diacetone alcohol, and 0.04 g of a leveling agent (manufactured by Shin-Etsu Chemical Co., Ltd.: KY-1203), each curable coating composition was prepared so that the refractive index of the film was 1.8 to 1.82.

### [Paint preparation 2]

By mixing 4 g of each of titanium dioxide fine particle (TTO-V5)-containing organic solvent dispersions obtained in "Examples 17 to 21" and "Examples 23 to 29" and "Comparative Examples 2 to 4", 0.21 g of dipentaerythritol hexaacrylate (manufactured by TOAGOSEI CO., LTD.: M-405), 0.21 g of urethane acrylate (manufactured by TOAGOSEI CO., LTD.: M-1200), 0.021 g of IRGACURE (registered trademark)-184, 0.4 g of diacetone alcohol, and 0.04 g of a leveling agent (manufactured by Shin-Etsu Chemical Co., Ltd.: KY-1203), each curable coating composition was prepared so that the refractive index of the film was 1.8 to 1.82.

### [Measurement of refractive index and the like of paint film]

Each curable coating composition prepared in the above was applied to a glass substrate as a coating liquid prepared as a paint, pre-dried at 150°C for 5 minutes, and then cured by being irradiated by a high-pressure mercury lamp. In this way, three paint films having different film thicknesses were formed with respect to each curable coating composition. The haze of the obtained paint film was measured by a haze meter (NDH-7000 manufactured by NIPPON DENSHOKU INDUSTRIES CO., LTD.), and the film thickness of the paint film and the refractive index at a measurement wavelength of 589 nm were measured by an ellipsometer (SmartSE, manufactured by HORIBA, Ltd.). The film thickness and the HAZE value were plotted, and the HAZE value at a film thickness of 3 µm was calculated by linear approximation, which are shown together in Table 2.

**[Table 2]**

| Experiment Examples | Silicate compound having amino group | Compound having α,β-unsaturated carbonyl group | a/b | Inorganic particles | Solvent | Dispersion state | HAZE |
|---|---|---|---|---|---|---|---|
| | | | | | | | Film thickness of 3 µm |
| Example 12 | KBM-903 | 130A | 1 | TTO-51N | PGME | ○ | 0.75 |
| Example 13 | KBM-903 | 130A | 2 | TTO-51N | PGME | ○ | 0.61 |
| Example 14 | KBM-903 | 130A | 3 | TTO-51N | PGME | ○ | 0.59 |
| Example 15 | KBM-903 | 130A | 5 | TTO-51N | PGME | ○ | 0.55 |
| Example 16 | KBM-903 | 130A | 10 | TTO-51N | PGME | ○ | 0.62 |
| Example 17 | KBM-903 | 130A | 1.5 | TTO-V5 | PGME | ○ | 1.20 |
| Example 18 | KBM-903 | 130A | 3 | TTO-V5 | PGME | ○ | 1.09 |
| Example 19 | KBM-903 | 130A | 5 | TTO-V5 | PGME | ○ | 0.99 |
| Example 20 | KBM-903 | DPM-A | 1 | TTO-V5 | PGME | ○ | 0.99 |
| Example 21 | KBM-903 | DPM-A | 1.5 | TTO-V5 | PGME | ○ | 0.77 |
| Example 22 | KBM-903 | DPM-A | 1.5 | TTO-51N | PGME | ○ | 0.60 |
| Example 23 | KBM-903 | DPM-A | 3 | TTO-V5 | PGME | ○ | 0.76 |
| Example 24 | KBM-903 | THF-A | 1.5 | TTO-V5 | PGME | ○ | 1.03 |
| Example 25 | KBM-903 | MTG-A | 3 | TTO-V5 | PGME | ○ | 1.12 |
| Example 26 | KBM-903 | DPM-A | 1.25 | TTO-V5 | PGMEA | ○ | 0.90 |
| Example 27 | KBM-903 | DPM-A | 1.5 | TTO-V5 | EtOH | ○ | 1.03 |
| Example 28 | KBM-903 | DPM-A | 1.5 | TTO-V5 | IPA | ○ | 1.03 |
| Example 29 | KBM-903 | DPM-A | 1.25 | TTO-V5 | MEK | ○ | 0.82 |
| Comparative Example 2 | KBM-903 | 1,6HX-A | 2 | TTO-V5 | PGME | × | - |
| Comparative Example 3 | KBM-903 | 14EG-A | 2 | TTO-V5 | PGME | × | - |
| Comparative Example 4 | KBM-903 | M-309 | 3 | TTO-V5 | PGME | × | - |

### [Reference Example A]

A solution was obtained by mixing 0.827 g of 3-mercaptopropyl trimethoxysilane (manufactured by Shin-Etsu Chemical Co., Ltd.: KBM-803 which is referred to as "KBM-803" hereinafter), 0.853 g of DPM-A, and 21.92 g of PGME. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. In this regard, the molar ratio of "KBM-803" to "DPM-A" was 1 : 1. After removing the beads, centrifugation was performed to collect the supernatant, centrifugation was performed to collect the supernatant, thereby obtaining a dispersion, that is, "PGME dispersion A". When the dispersion state was measured in the same way as the above, the state was "△". Further, when the HAZE value at a film thickness of 3 µm was calculated, the value was 1.43.

### [Reference Example B]

A solution was obtained by mixing 0.827 g of KBM-803, 0.853 g of DPM-A, and 21.92 g of PGMEA. And then, to the obtained solution were added 8.4 g of titanium oxide (manufactured by ISHIHARA SANGYO KAISHA, LTD.: TTO-V5) and 65 g of 0.1 mm zirconia beads, and dispersed with a bead mill. In this regard, the molar ratio of "KBM-803" to "DPM-A" was 1 : 1. After removing the beads, centrifugation was performed to collect the supernatant, thereby obtaining a dispersion, that is, "PGMEA dispersion B". When the dispersion state was measured in the same way as the above, the state was "○". Further, when the HAZE value at a film thickness of 3 µm was calculated, the value was 1.19.

### INDUSTRIAL APPLICABILITY

The present invention relates to surface-coated inorganic particles coated with a reaction product of the following: a silicate compound having an amino group and/or a hydrolysis product of the silicate compound having an amino group, and a compound having one α,β-unsaturated carbonyl group in a molecule thereof. According to the surface-coated inorganic particles of the present invention, the dispersibility of inorganic particles in an organic solvent can be sufficiently improved, and a function or performance of the inorganic particles can thereby be sufficiently exhibited. In addition, the organic solvent dispersion and the paint film of the obtained surface-coated inorganic particles can be made excellent in the transparency and the refraction properties.

## Claims

1. Surface-coated inorganic particles coated with a reaction product, the reaction product comprising:
a silicate compound having an amino group and/or a hydrolysis product of the silicate compound having an amino group, and
a compound having one α,β-unsaturated carbonyl group in a molecule thereof.

2. The surface-coated inorganic particles according to claim 1, wherein the compound having one α,β-unsaturated carbonyl group is a compound further having an ether bond.

3. The surface-coated inorganic particles according to claim 1 or 2, wherein the compound having one α,β-unsaturated carbonyl group is a compound having the following: an ethylene glycol chain (wherein "n" expressing the number of polymerizations of the ethylene glycol chain is 2 to 10), a propylene glycol chain (wherein "n" expressing the number of polymerizations of the propylene glycol chain is 2 to 10), or a 5- to 6-membered cyclic group.

4. The surface-coated inorganic particles according to any one of claims 1 to 3, wherein the compound having one α,β-unsaturated carbonyl group is (meth)acrylates having a 5- to 6-membered cyclic group, or alkoxypolyalkylene glycol (meth)acrylates.

5. The surface-coated inorganic particles according to any one of claims 1 to 4, wherein the compound having one α,β-unsaturated carbonyl group is tetrahydrofurfuryl acrylate, methoxytriethylene glycol acrylate, methoxypolyethylene glycol acrylate, or methoxydipropylene glycol acrylate.

6. The surface-coated inorganic particles according to any one of claims 1 to 5, wherein 0.8 ≤ "a/b" ≤ 10 is satisfied when in the reaction product, the amino group in the silicate compound having an amino group and/or the hydrolysis product of the silicate compound having an amino group is "a" mol and the compound having one α,β-unsaturated carbonyl group is "b" mol.

7. The surface-coated inorganic particles according to any one of claims 1 to 6, wherein the reaction product is a low-molecular silicate compound having 3 to 100 carbon atoms and/or a hydrolysis product of the low-molecular silicate compound.

8. The surface-coated inorganic particles according to any one of claims 1 to 7, wherein the inorganic particles are composed of inorganic core particles and an inorganic compound coating each surface of the inorganic core particles.

9. The surface-coated inorganic particles according to any one of claims 1 to 8, wherein the inorganic particles as set forth in any one of claims 1 to 7 or the inorganic core particles as set forth in claim 8 are titanium oxide particles.

10. An organic solvent dispersion of surface-coated inorganic particles, wherein the surface-coated inorganic particles according to any one of claims 1 to 9 are dispersed in an organic solvent.

11. A paint composition comprising the surface-coated inorganic particles according to any one of claims 1 to 9, an organic solvent, and a resin.

12. A paint composition comprising the organic solvent dispersion according to claim 10 and a resin.

13. A method for manufacturing surface-coated inorganic particles, the method comprising the steps of:
a first step of mixing, in an aqueous solvent, inorganic particles with a silicate compound having an amino group and/or a hydrolysis product of the silicate compound having an amino group, thereby coating each surface of the inorganic particles with the silicate compound having an amino group and/or the hydrolysis product of the silicate compound having an amino group; and
a second step of subsequently substituting the aqueous solvent with an organic solvent, and then mixing therewith a compound having one α,β-unsaturated carbonyl group in a molecule thereof, thereby coating each surface of the inorganic particles with a reaction product of the following: the silicate compound having an amino group and/or the hydrolysis product of the silicate compound having an amino group, each of which coats each surface of the inorganic particles; and the compound having one α,β-unsaturated carbonyl group.

14. The method for manufacturing surface-coated inorganic particles according to claim 13, wherein in the second step, the step of subsequently substituting the aqueous solvent with an organic solvent is performed by mixing, in the aqueous solvent, the surfactant and the organic solvent, and transferring inorganic particles to the organic solvent.

15. A method for manufacturing surface-coated inorganic particles, the method comprising: mixing inorganic particles, a silicate compound having an amino group and/or a hydrolysis product of the silicate compound having an amino group, and a compound having one α,β-unsaturated carbonyl group in a molecule thereof, thereby coating each surface of the inorganic particles with a reaction product of the silicate compound having an amino group and/or the hydrolysis product of the silicate compound having an amino group and the compound having one α,β-unsaturated carbonyl group.

16. The method for manufacturing surface-coated inorganic particles according to any one of claims 13 to 15, wherein 0.8 ≤ "a/b" ≤ 10 is satisfied when the amino group in the silicate compound having an amino group and/or the hydrolysis product of the silicate compound having an amino group is "a" mol and the compound having one α,β-unsaturated carbonyl group is "b" mol.

17. A method for manufacturing an organic solvent dispersion of surface-coated inorganic particles, the method comprising the steps of:
a third step of adding a poor solvent to the organic solvent dispersion obtained in the second step as set forth in claim 13 or 14, and subjecting the poor solvent-added organic solvent dispersion to solid-liquid separation, thereby collecting the surface-coated inorganic particles; and
a fourth step of subsequently dispersing the collected surface-coated inorganic particles in an organic solvent.

18. A method for manufacturing an organic solvent dispersion of surface-coated inorganic particles, the method comprising: mixing, in an organic solvent, inorganic particles, a silicate compound having an amino group and/or a hydrolysis product of the silicate compound having an amino group, and a compound having one α,β-unsaturated carbonyl group in a molecule thereof, thereby coating each surface of the inorganic particles with a reaction product of the silicate compound having an amino group and/or the hydrolysis product of the silicate compound having an amino group and the compound having one α,β-unsaturated carbonyl group, and dispersing the coated inorganic particles in the organic solvent.

19. The method for manufacturing an organic solvent dispersion according to claim 18, wherein 0.8 ≤ "a/b" ≤ 10 is satisfied when the amino group in the silicate compound having an amino group and/or the hydrolysis product of the silicate compound having an amino group having an amino group is "a" mol and the compound having one α,β-unsaturated carbonyl group is "b" mol.

20. A method for manufacturing a surface-coated inorganic particle layer, the method comprising applying or spraying on a substrate the organic solvent dispersion of surface-coated inorganic particles according to claim 10 or the paint composition according to claim 11 or 12.
